(19) **Europäisches Patentamt / European Patent Office / Office européen des brevets**

(11) **EP 3 800 882 B1**

(12) **EUROPEAN PATENT SPECIFICATION**

(45) Date of publication and mention
of the grant of the patent:
**04.12.2024   Bulletin 2024/49**

(21) Application number: **19201123.7**

(22) Date of filing: **02.10.2019**

(51) International Patent Classification (IPC):
**H04N 17/00** (2006.01)        **H04N 19/154** (2014.01)
**H04N 19/48** (2014.01)

(52) Cooperative Patent Classification (CPC):
**H04N 19/154; H04N 17/004; H04N 19/48**

(54) **INFORMATION-ADAPTIVE MIXED DETERMINISTIC/MACHINE-LEARNING-BASED BIT STREAM VIDEO-QUALITY MODEL**

INFORMATIONSADAPTIVES GEMISCHTES DETERMINISTISCHES/AUF MASCHINENLERNEN BASIERTES BITSTROM-VIDEOQUALITÄTSMODELL

MODÈLE DE QUALITÉ VIDÉO DE FLUX BINAIRES BASÉ SUR L'APPRENTISSAGE AUTOMATIQUE/DÉTERMINISTE MIXTE ADAPTATIF D'INFORMATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.04.2021   Bulletin 2021/14**

(73) Proprietor: **Deutsche Telekom AG**
**53113 Bonn (DE)**

(72) Inventors:
- **RAMACHANDRA, Rakesh**
  **98693 Ilmenau (DE)**
- **GÖRING, Steve**
  **98693 Ilmenau (DE)**
- **RAAKE, Alexander**
  **10405 Berlin (DE)**
- **LIST, Peter**
  **59427 Unna (DE)**
- **ROBITZA, Werner**
  **1200 Wien (AT)**
- **FEITEN, Bernhard**
  **13437 Berlin (DE)**
- **WÜSTENHAGEN, Ulf**
  **15537 Grünheide (DE)**

(74) Representative: **Vossius & Partner**
**Patentanwälte Rechtsanwälte mbB**
**Siebertstrasse 3**
**81675 München (DE)**

(56) References cited:
- **MUHAMMAD SHAHID ET AL: "A reduced complexity no-reference artificial neural network based video quality predictor", IMAGE AND SIGNAL PROCESSING (CISP), 2011 4TH INTERNATIONAL CONGRESS ON, IEEE, 15 October 2011 (2011-10-15), pages 517 - 521, XP032070622, ISBN: 978-1-4244-9304-3, DOI: 10.1109/CISP.2011.6099931**
- **ANONYMOUS: "Ensemble learning - Wikipedia", 3 September 2019 (2019-09-03), XP055675779, Retrieved from the Internet <URL:https://en.wikipedia.org/w/index.php?title=Ensemble_learning&oldid=913844668> [retrieved on 20200311]**
- **ROBI POLIKAR: "Ensemble learning", SCHOLARPEDIA, 1 January 2009 (2009-01-01), XP055602598, Retrieved from the Internet <URL:http://www.scholarpedia.org/article/Ensemble_learning> [retrieved on 20190704], DOI: 10.4249/scholarpedia.2776**
- **ELWERGHEMMI RADHIA ET AL: "Online QoE Prediction Model Based on Stacked Multiclass Incremental Support Vector Machine", 2019 8TH INTERNATIONAL CONFERENCE ON MODELING SIMULATION AND APPLIED OPTIMIZATION (ICMSAO), IEEE, 15 April 2019 (2019-04-15), pages 1 - 5, XP033639395, DOI: 10.1109/ICMSAO.2019.8880302**

EP 3 800 882 B1

**Description**

The present disclosure is directed towards a method for predicting video quality using a mixed deterministic and machine learning model.

HTTP Adaptive Streaming (HAS), for example as implemented by MPEG Dynamic Adaptive Streaming over HTTP (DASH), is currently a widely used technology for over-the-top (OTT) video streaming. Videos accounted for 76% of the consumer Internet traffic in 2016, and that share is predicted to increase to 82% by 2021 (Cisco. (2017)). For Internet Service Providers (ISPs) and OTT providers, assessing the perceptual quality of the videos that are transmitted over these services is important to ensure a high degree of satisfaction among their customers. For OTTs in particular, the possibility of providing a video with the best quality for the lowest bandwidth possible can lead to energy and cost reductions and thus is an important goal.

In HAS, for a given video, several representations with varying bit rates are created from an original reference. These representations are segmented for transmission. The representations target different bandwidths; clients can request the respective representations for their current network conditions, and switch between them (adaptation). The adaptation algorithms in HAS mainly try to optimize the requests for encoded video segments in a way that the overall bandwidth consumed or the risk of depleting the client-side buffer is minimized. A more advanced adaptation algorithm may also optimize for delivering the best possible overall quality. Hence, there is a need for a prediction of the visual quality of a video segment, so that the adaptation algorithms can use this as a fundamental criterion to improve streaming quality. This prediction is performed by a model that takes as input the video stream and outputs the visual quality. The output should match as closely as possible the quality that a human subject would rate when watching the same video stream. Such a model is usually trained with the help of ground truth data, for example actual ratings of human viewers. The training is usually done by optimizing the values of the internal model coefficients so that the residuum (difference) between model output and the ground truth data is minimized, thereby improving overall prediction accuracy.

Depending on the input data that is used for quality assessment, video quality models can be classified into three main categories.

Media-layer models use the decoded frames to estimate video quality. They can be further categorized into three types namely ((A. Takahashi, 2008) (A. Raake, 2017)),

- Full-reference (FR): full access to the reference video is required
- Reduced-reference (RR): partial information of the reference signal is required
- No-reference (NR): no reference signal is required as input, quality is estimated directly using only the degraded signal

Bit stream-layer models: Depending on the level of access to the bit stream, three main types have recently been distinguished in the context of ITU-T Rec. P.1203 (ITU-T, Recommendation P.1203, 2016) namely,

- Mode 0: uses only meta information such as the codec used, resolution, bit rate and frame rate
- Mode 1: meta information + frame types (I and non-1) + frame sizes (I and non-1)
- Mode 3: full access to the bit stream
- Mode 2: a special case of Mode 3 which is allowed to parse only 2% of the Mode-3 type information.

Hybrid models use a combination of decoded frames and bit stream as input to estimate video quality.

Conventional approaches for estimating or predicting video quality using either parametric- or machine-learning-based computation are known in the art.

In general video quality can be predicted using several approaches, for example pixel based or bit stream-based (M. Shahid 2014). There have been several pixel-based and bit stream-based video quality models reported in literature. Several approaches can be used to develop bit stream-based video quality models. Some of the approaches are: parametric approach, machine learning approach etc. This section will mostly focus on the parametric and machine learning based video quality models.

Concerning the parametric-based models, in (ITU-T, 2014), a parametric video quality model for video quality estimation for IPTV applications is presented. This model takes into account distortions due to both compression and erroneous transmission.

Considering that most of today's popular video streaming providers used HAS for video transmission, effects other than compression artifacts need to be handled by video quality models. In EP 3 291 556 A1, bit stream-based video quality prediction models for HAS have been proposed. These models are applicable up to a resolution of 1080p and frame rate of 30fps. Moreover, only videos encoded with H.264 video codec are considered in these models. All presented models are standardized as the ITU-T Recommendation P. 1203 (ITU-T, Recommendation P. 1203, 2016).

Beside bit stream-based video quality models other models exist, e.g. using pixel data of the decoded video frames to estimate video quality. A categorization of such pixel models according to their input data, for example full-reference, reduced-reference, no-reference was outlined above (M. Shahid 2014).

One example of a full-reference model is the perceptual video quality model designed using a Support Vector Machine (SVM)-based approach that was presented in US 2016 0335 754 A1. This model referred to as "Video Multimethod Assessment Fusion (VMAF)" combines various objective metrics to produce a perceptual quality score for a target video.

On the other side, several pixel-based no-reference models have been presented in the literature. A Support Vector Regression (SVR)-based model to predict the level of quantization and PSNR is proposed in (J. Søgaard, 2015).

A pixel-based, no-reference video-quality model based on deep neural networks (DNN) is proposed in S. Göring, 2018 . In the domain of gaming videos, a machine learning based no-reference video quality model is presented in S. Göring, 2019. In addition to proposing a new model for no-reference evaluation of gaming videos, the study described in S. Göring, 2019 also presents new features such as staticness, blockmotion etc. that is used in the model proposed in that paper. In N. Barman, 2019, an SVR-based hybrid no-reference video quality model for gaming videos has been proposed. This study uses VMAF as the ground truth for model development.

In contrast to the parametric bit stream models, machine learning based bit stream models have also been proposed in the literature. One main advantage of pure bit stream based models in contrast to pixel based models is their application scope, due to a faster processing and prediction of video quality scores.

A no-reference bit stream-based machine learning video quality model is proposed in M. Shahid, 2013. The model presented in this work is based on Least Squares (LS) SVM as the employed machine-learning method. This model was evaluated on its ability to predict metrics such as PSNR, PEVQ, SSIM (Z. Wang, 2004), MSSIM (Z. Wang 2004) and subjective MOS obtained from video-quality tests. The LS-SVM-based model (M. Shahid, 2013) is trained on CIF and QCIF videos at 15 and 30fps with videos encoded using H.264. This model is not designed to take into account the effects that are encountered in HAS and also does not consider resolution and video codecs that are typical used in current HAS applications.

In Mocanu, 2015, a machine-learning-based no-reference bit stream model is proposed. The main focus of that work was to explore the added value of machine learning in video quality estimation. To this end, the proposed model is designed to output two values, one of which is the predicted mean opinion score (MOS) and the other value provides the variability of subjective data. However, only one codec was considered. The model uses a random neural network as the machine-learning approach.

In E. Demirbilek, 2017, various machine-learning-based video-quality models have been presented. Decision Tree-, Deep Learning- and Genetic Programming-based models have been presented in this work. These models use quantization parameter, frame rate, packet loss ratio, bit rate, resolution and codec as the main features for all model variants. These models are only tested on H.263 and H.264 encoded videos. Similar to the model by (M. Shahid, 2013), these models are not capable of handling the effects seen in HAS and for newer codecs.

Muhammad Shahid et at. disclose a reduced complexity no-reference artificial neural network based video quality predictor.

Wikipedia features an article on Ensemble Learning.

Robi Polikar discloses an article about ensemble learning on Scholarpedia.

Elwerghemmi Radhia et al. disclose an online QoE prediction model based on stacked multiclass incremental support vector machine.

According to the present invention, an information-adaptive mixed deterministic/machine-learning-based bit stream video-quality model is proposed.

The invention is defined in the independent claims. Further aspects of the invention are specified in the dependent claims.

Disclosed herein is a method for predicting the quality Q of a video bit stream. The method comprises obtaining a video segment and a corresponding bit stream, parsing the bit stream by a bit stream parser, and obtaining bit stream parameters. The quality Q is predicted by using a deterministic model and a machine learning model with the obtained bit stream parameters, wherein the predicted video quality is a weighted sum of the prediction of both models. A residual of the deterministic model is predicted by the machine learning model. That is, during optimizing of the model coefficients, a residuum or prediction error of the deterministic model is estimated by the machine learning model. It thereby compensates the prediction error.

Particularly, the visually perceived video quality Q of a given video sequence based on the bit stream of said video sequence, and expressed on a video-quality rating scale may be predicted by the proposed method.

Various embodiments may preferably implement the following features:

Preferably, the predicted video quality Q is computed as

$$Q = w_1 * M_{parametric} + w_2 * M_{machine\ learning}$$

wherein $M_{parametric}$ and $M_{machine\ learning}$ are the results of the deterministic model and the machine learning model, respectively, and $w_1$ and $w_2$ are weighting factors of the deterministic model and the machine learning model, respectively with $w_1 + w_2 = 1$. Preferably, the weighting factor values are dependent on the available bit stream parameters. The weighting factor of the machine learning model may increase with the number of available bit stream parameters.

In other words, as the machine learning model gets better - since more information or input is available -, the weight of the machine learning model may increase.

Preferably, the bit stream parameters comprise at least one of bit rate or resolution or frame rate or codec information or video codec information.

Preferably, the bit stream parameters further comprise at least one of frame sizes or ratio of I-frame to non-I frame size or a prediction of the deterministic model.

Preferably, the bit stream parameters comprise at least one of average motion per frame or standard deviation of motion in the x-direction (horizontal motion) per frame or maximum quantization parameter of non-I frames or minimum quantization parameter or average quantization parameter of non-I frames or frame sizes and/or quantization degradation,

Preferably, a quantization parameter, QP, is predicted using said parameters. A quantization degradation, quant, may be computed as

$$quant = \frac{QP_{non-I\ frames}}{QP_{max}}$$

wherein $QP_{non-I\ frames}$ is the quantization parameter of non-I frames in the bit stream and $QP_{max}$ is the maximum quantization parameter possible in the bit stream.

Preferably, *quant* is a normalized value of QP. The QP is a parameter directly related to the level of compression applied during encoding of a video segment and indirectly related to the quality of a video segment. $QP_{non-I\ frames}$ is the quantization parameter of non-I frames in the bit stream. $QP_{max}$ is the maximum quantization parameter possible for the codec used in the bit stream. Non-1 frames are frames within the bit stream that are dependent on other frames in order to be decoded.

Preferably, the machine learning model is one of Random Forest, Support Vector Machine (SVM), or Support Vector Regression (SVR). Preferably, the machine learning model comprises an initial data set which is trained by the machine learning model. Other machine learning models may also be used.

Disclosed herein is further a data processing apparatus. The data processing apparatus comprises an obtaining unit for obtaining a video segment and a corresponding bit stream, a receiving unit configured to parse the bit stream by a bit stream parser, and a parameter unit for obtaining bit stream parameters. A prediction unit may be configured to predict the video quality by using a deterministic model and a machine learning model with the obtained bit stream parameters, wherein the prediction unit is configured to calculate the video quality as a weighted sum of both models.

The invention is described with reference to the following figures:

Fig. 1 shows a schematic diagram of an embodiment according to the present invention,
Fig. 2 shows a flow chart of the method according to an embodiment of the present invention, and
Fig. 3 shows a schematic diagram of an apparatus according to an embodiment of the present invention.

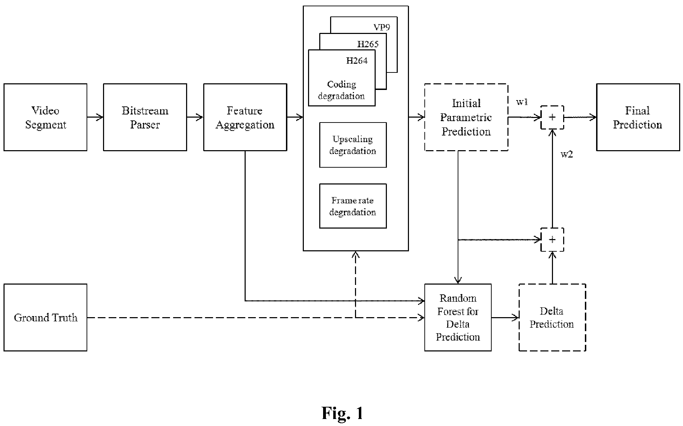

An exemplary embodiment of the invention is shown in figure 1. Therein, a video segment is parsed by a bit stream parser. Depending on the level of access to the bit stream provided to it, the bit stream parser generates the available bit stream parameters. Depending on the type of codec used, a different parser may be used. The obtained parameters are then aggregated. This can be done e.g. per segment, per group of pictures (GOP) or in any other suitable manner.

The obtained parameters are then fed into a deterministic model which calculates an initial parametric prediction of video quality. The residuum between parametric prediction and ground truth data is then calculated. In order to reduce the remaining prediction error of the deterministic model, a machine learning model is additionally used, which estimates video quality, additionally compensating this residuum. Said machine learning model is based on the same data as the parametric model and it is trained to determine not only the video quality, but also the residuum of the parametric prediction. The output of the deterministic model and the machine learning model are then added using weighting factors. Here, the weighting factors are dependent on the type, complexity and number of parameters available. In other words, the more detailed the bit stream may be analysed and the more bit stream parameters are available, the better the machine learning model gets. Thus, a higher and more detailed number of bit stream parameters may lead to a higher weighting factor of the machine learning model.

The present invention describes bit stream-based video-quality prediction models that determine the perceptual quality of a short-duration (e.g., 8 s long) video sequence. These models predict the video quality as perceived by a user on a scale from 1-5, with 1 representing the worst quality and 5 representing the best quality. The output can be provided on a per-segment or per-second basis. The main focus of the presented models is the (no-reference) bit stream-based video quality prediction, however the general concept is not limited to this use case. In other words, the visually perceived video quality of a given video sequence is predicted based on the bit stream of said video sequence. The perceived video quality may be expressed on a video-quality rating scale. The presented models can handle resolutions from 240p up to 3840p (4K UHD), with frame rates from 15 up to 60 fps for three different codecs (H.264, H.265 and VP9). It is understood by the skilled person that further codecs, higher frame rates, and higher resolutions might be processed with the method and apparatus according to the present disclosure by adapting the available and used parameters accordingly.

The provided models can be used as building blocks in various applications, e.g., as part of a video quality model that integrates the short-term predictions over a longer period (e.g., 1, 3 or 5 minutes), which can use the calculated per-segment and per-second scores as input with other side-information to predict overall (visual or audiovisual) quality.

More particularly, the present disclosure refers to information-adaptive mixed deterministic / machine-learning-based video-quality models. These models are capable of predicting video quality for every 1 second period and for a segment of a length of multiple seconds (e.g., up to 8 or 10 seconds). The models that are described are combinations of deterministic parametric models and machine learning models. In the following, a Random Forest based machine learning model will be used as an example only. However, other machine learning models might also be suitable for the task. The video quality (Q) can be predicted as follows:

$$Q = w_1 * M_{parametric} + w_2 * M_{randomForest} \qquad (1)$$

where Q is the overall quality prediction, $M_{parametric}$ and $M_{randomForest}$ refer to the parametric model and Random Forest model parts, respectively, and $w_1$ and $w_2$ are weights to emphasize one model part over the other, which may improve prediction accuracy. The weights may be selected freely according to the chosen models and other factors. Preferably, the weighting factors are in a range between 0 and 1. More preferably, the weighting factors add up to 1.

The "information-adaptive" concept associated with the model refers to the ability of the regression-based machine learning algorithm part of the model to scale in terms of prediction accuracy based on the available content-related features.

The proposed model comprises three possible layers based on the available input information for the parametric part on a per-segment basis. Herein, they are characterized and referred to as different "levels":

- Level 1: This variant of the model has access to the video codec used, the encoding bit rate, coding resolution, and coding frame rate.

- Level 2: This variant has access to all the information from Level 1, and in addition uses the video frame types (keyframe, non-keyframe) and sizes.

- Level 3: This variant has access to the entire video bit stream.

With a higher level, i.e. more available input information for the models, a higher prediction accuracy can be achieved at the expense of higher computational complexity, and the requirement that the model actually has access to that information. It is to be noted that decoding of frames (such as done with pixel-based models) is not necessary in any of the levels.

The features for the machine-learning part of the model, which is exemplarily based on a Random Forest regression, are derived from the available input information for each level. Moreover, it is not limited to a Random Forest, as other models that can act as classifiers or regressors can be used.

In the following, the parametric part or deterministic model will be discussed in detail.

The parametric part of the model $M_{parametric}$ is based on the principle of degradation-based modeling. In the proposed approach, three different degradations are identified which may affect the perceived quality of a given video. The general concept is that the higher the degradation, the lower the quality of the video.

The three degradations that affect that quality of a given video are as follows:

- Quantization degradation: This relates to the coding-related degradations which are introduced in videos based on the selected quantization settings. This degradation can be perceived by the end-user as blockiness and other artifacts. The type of artifacts and their strength are codec-dependent, as different codecs introduce different distortions based on the selected quantization settings.

5

- Upscaling degradation: This relates to the degradation introduced mainly due to the encoded video being upscaled to the higher display resolution during playback, thereby resulting in blurring artifacts. These are the same for all the codecs, as the display resolution is the only influencing factor for this degradation. It is further assumed that the upscaling algorithm is constant and independent of the used codec, which is the case in real world streaming, where upscaling is performed by the player software and/or display device used.

- Temporal degradation: This relates to the degradation introduced due to playing out the distorted video at a reduced frame rate compared to the display's native frame rate, thereby resulting in jerkiness. This is the same for all the codecs as the video frame rate is the only influencing factor for this degradation.

As described above, an output scale of 1-5 is typically used for video quality model predictions, as it aligns with the 5-point absolute category rating scale mostly used in subjective video-quality tests, typically referred to as the MOS-scale, mean opinion score scale. In the degradation-based modeling case, the computation of all the three degradations are performed on the so-called R-scale (100-scale), which was originally introduced in the so-called E-model, cf. ITU-T Rec. G.107. This scale is used internally to the model to avoid saturation of the quality in the higher part of the 5-point scale.

The *RfromMOS* and *MOSfromR* computations shown below involve information loss due to the fact that these two functions assume that the highest MOS that can be reached is 4.5, thereby resulting in clipping on the MOS-scale for ratings higher than 5. To avoid this information loss, all the subjective data used to train the model is compressed to the 4.5-scale by a simple linear transformation, and the model is trained on this data. Therefore, the resulting coefficients predict the initial prediction on a 4.5-scale. To obtain the prediction on the original 5-point scale, the initial prediction is scaled back to the 5-scale using the inverse transformation.

The parametric / deterministic part in all three models uses the same "core model" structure. The feature set for the Random Forest part of the model is adapted based on the mode.

Note that the Random Forest part of the model is used to take into account the effects which are not captured by the three types of degradation used in the parametric/ deterministic, "core-part" of the model.

The core model will now be presented in detail. The values of the coefficients may be found in the tables provided below, dependent on the Mode or Level and type of device used. Here, an 1-frame (intra coded frame) denotes a picture that is coded independently of all other pictures. Video content can be characterized by its amount of spatial and temporal information. The higher the spatial and temporal information is, the higher is its complexity. A quantization parameter (QP) is chosen to encode a particular video at a given target bit rate depending on spatiotemporal complexity of the particular video, taking into account the content-related properties.

The determination of the quantization degradation *quant* is performed as follows:

$$quant = \frac{QP_{non-I\,frames}}{QP_{max}} \qquad (2)$$

Therein, $QP_{max}$ is codec and bit depth dependent and *quant* is in the range 0 - 1.

*quant* is a normalized value of the quantization parameter QP, wherein the QP is a parameter directly related to the level of compression applied during encoding of a video segment and indirectly related to the quality of a video segment. $QP_{non-I\,frames}$ is the quantization parameter of non-I frames in the bit stream and $QP_{max}$ is the maximum quantization parameter possible for the codec used in the bit stream. Non-I frames are frames within the bit stream that are dependent on other frames in order to be decoded.

Furthermore, the following equations are used

$$mos_q = a + b * exp(c * quant + d)\,, \qquad (3)$$

$$D_q = 100 - RfromMOS(mos_q), \qquad (4)$$

$$D_q = max(\min(D_q, 100), 0) \qquad (5)$$

Determination of the upscaling degradation is calculated as follows:

$$scale\_factor = \frac{coding\_res}{display\_res} \qquad (6)$$

Where *display_res* = (3840 * 2160) for PC and (2560 * 1440) for mobile and tablet, *coding_res* corresponds to the resolution at which the video is encoded and the *scale_factor* is in the range 0 - 1.

Furthermore,

$$D_u = x * log(y * scale\_factor), \text{ and} \qquad (7)$$

$$D_u = max(\min(D_u, 100), 0) \qquad (8)$$

The determination of the frame rate degradation can be computed as follows:

$$D_t = z * log(k * (framerate\_scale\_factor)), \qquad (9)$$

Where $framerate\_scale\_factor = \frac{coding\_framerate}{60}$ and *framerate_scale_factor* is in the range 0 - 1.

With

$$D_t = max(\min(D_t, 100), 0) \qquad (10)$$

the parametric part related final MOS can be calculated.

$$M_{parametricR} = 100 - (D_q + D_u + D_t) \qquad (11)$$

$$M_{parametricS} = MOSfromR(M_{parametricR}) \qquad (12)$$

$$M_{parametric} = scaleto5(M_{parametricS}). \qquad (13)$$

Scaling is done as the coefficients are trained by compressing the subjective scores to a scale of 4.5 to avoid the information loss that can be introduced by the RfromMOS and MOSfromR calculations, as noted above.

The machine-learning-based part of the model will now be further described. In general, video content can be characterized by its amount of spatial and temporal information. The higher the spatial and temporal information, the higher its complexity. The quantization parameter (QP) chosen to encode a particular video at a given target bit rate depends on spatiotemporal complexity of the particular video, taking into account the content-related properties.

The parametric part of the model accommodates the content-related complexity by using the values of quantization parameter (QP) from the bit stream, which, however, is only available in level 3. When the bit stream is not available (Level 1 and 2), estimations of the QP are used.

In addition to QP, other parameters such as average motion or frame sizes can be used to more accurately estimate the complexity of a video. The general idea of the usage of the Random Forest component in the model is to take into account the effect of these different content-related features on user perception of quality and thereby enhance the accuracy of quality prediction.

The proposed Random Forest model estimates a "residuum prediction", that is, the difference between the ground truth data (e.g. a real video quality score obtained from subjective tests) during model training and the prediction of the parametric/deterministic part of the model, which uses only QP or estimated QP and the separate components addressing upscaling and temporal degradation due to the given frame rate. This difference can be explained by the contribution of features to the overall quality score, which are not available in the parametric/deterministic model part. In other words, the machine learning model calculates the prediction error, i.e. residuum, of the deterministic/parametric model. That is the part that may not be properly captured by the deterministic model.

The features available to the Random Forest depend on the chosen level. Different statistical aggregations of the features are then computed and used as the input to the Random Forest model. In addition to the content-related features, the Random Forest model may explicitly take into account the prediction from the parametric part of the model as further input. The final Random Forest-based prediction is the summation of the prediction of the parametric part and the predicted residuum.

$$M_{randomForest} = M_{parametric} + Residuum. \qquad (14)$$

The procedure and the parameters of a Level 3 quality prediction are now discussed in detail. The model corresponding to Level 3 has access to the entire bit stream as input. The deterministic part is computed as follows.

The coding degradation is codec- and bit-depth-dependent. This results in five sets of coefficients, one each for H.264-8bit, H.264-10bit, H.265-8bit, H.265-10bit and VP9 codecs.

$QP_{max}$ is 51 for H.264-8bit, H.265-8bit; 63 for H.264-10bit, H.265-10bit and 255 for VP9.

Since the QP value is available directly in Level 3, there is no need for any pre-computation related to QP. The model part based on parametric/deterministic prediction is realized using the core model as described above.

Table 1 - Mode 3 - PC/TV

| Codec | a | b | c | d |
|---|---|---|---|---|
| H264 | 4.3861 | -1.5019 | 3.8744 | -3.0771 |
| H264-10bit | 4.4739 | -0.9394 | 4.1362 | -2.9310 |
| H265 | 4.2962 | -1.1954 | 4.9862 | -3.8798 |
| H65-10bit | 4.4066 | -1.0154 | 4.8143 | -2.7447 |
| VP9 | 4.1259 | -1.2265 | 4.3782 | -3.9755 |

Table 2 - Mode 3 - Mobile/Tablet

| Codec | a | b | c | d |
|---|---|---|---|---|
| H264 | 4.3167 | -1.8403 | 5.2583 | -4.4970 |
| H264-10bit | 4.4346 | -0.7183 | 5.2868 | -3.9069 |
| H265 | 4.4446 | -1.7309 | 3.0377 | -2.8354 |
| H65-10bit | 4.9654 | -1.8623 | 2.4098 | -1.6839 |
| VP9 | 4.2467 | -1.5178 | 2.9339 | -3.1737 |

Table 3 - Resolution Upscaling

| End-device | x | y |
|---|---|---|
| PC/TV | -12.8292 | 2.4358 |
| Mobile/Tablet | -10.4174 | 2.2679 |

Table 4 - Frame rate Upscaling

| End-device | k | z |
|---|---|---|
| PC/TV | 3.7547 | -41.0545 |
| Mobile/Tablet | 3.5766 | -57.1618 |

The machine learning part of the model will now be presented. Any number of features that can be extracted from an encoded bit stream may be used as input to the Random Forest for Level 3, as the model corresponding to this mode has access to the entire bit stream. However, for reasons of computational complexity, such an approach is not reasonable in practice. Hence, an analysis of feature importance may be performed, by which the features with the maximum impact on the residuum quality prediction can be selected as final input features to the model.

Features with high impact on the prediction can be, but are not limited to, the following, representing the preferred embodiment of the disclosure:

- Average motion per frame
- Standard deviation of motion in the x-direction (horizontal motion) per frame
- Maximum quantization parameter of non-I frames
- Minimum quantization parameter
- Average quantization parameter of non-I frames
- Frame sizes
- 

$$\text{Quant} \left( quant = \frac{QP_{non-I\,frames}}{QP_{max}} \right)$$

- Parametric part prediction, $M_{parametric}$
- Bit rate
- Resolution
- Frame rate
- Codec
- Codec Profile

Various statistical aggregation of the features may be computed, including, but not limited to the following:

- Average
- Minimum, maximum
- Standard deviation
- Kurtosis
- Inter-quartile range (IQR)

The following features and the corresponding aggregations, considered alone or in combination, are preferred in the disclosure.

- Average motion per frame: kurtosis of the average motion over all non-I frames, which measures the "extremeness" in the deviations of motion per-frame
- The mean of the average motion of all non-I frames
- Kurtosis of the average motion over all frames
- Minimum standard deviation of motion in the x-direction (horizontal motion) per frame
- Standard deviation of Maximum quantization parameter of non-I frames
- Inter-quartile range (IQR) of the minimum quantization parameter (to take into account the variability of the minimum QP between frames)
- Mean, kurtosis and IQR of the average quantization parameter of non-I frames
- Maximum frame size
- Kurtosis and standard deviation of the non-I frame sizes
- Codec: 5 categories of codec (H.264, H.264-1 0bit, H.265, H.265-10bit, and VP9)
- Mean bit rate

The depth and number of trees used in the Random Forest may depend on the chosen features and number samples. In this exemplary embodiment of the disclosure, the Random Forest model uses 20 trees with a depth of 8. This hyper-parameter combination of the Random Forest is the preferred embodiment of the disclosure.

The more parameters are available to the machine learning model and the better said model is being trained, the better the residuum prediction gets. Thus, a Level 3 model having access to all relevant information is able to yield the best results.

The final prediction of quality is the weighted average of the prediction from the parametric part and the random forest part. For the case of Level 3, for example, equal weights can be assigned to both parts in equation (1):

$$Q = w_1 * M_{parametric} + w_2 * M_{randomForest} \qquad (1)$$

Here, $w_1$ = 0.5 and $w_2$ = 0.5. Further, a high weight on the Random Forest part can be justified by the large number of features available compared to lower levels of the model, as indicated in the following.

In addition to the per-segment video quality score, the model also outputs the per-second score. The per-second video quality score according to a preferred embodiment of the disclosure is calculated as follows:

$$Q_{per-sec} = \frac{mean(QP_{non-I,per-seg})}{mean(QP_{non-I,per-sec})} * Q \qquad (15)$$

Wherein $QP_{non-I,per-seg}$ is the average QP of all non-I frames in a segment, $QP_{non-I,per-sec}$ is the average QP of all non-I frames per second and Q is the per-segment video quality score as described above.

In case a Level 2 model is applied, the deterministic model has access to frame sizes, bit rate, resolution, frame rate and codec as input.

The coding degradation is only codec-dependent, as there is no access to the bit depth as input information. This results in three sets of coefficients, one each for H.264, H.265 and VP9. Also, the quantization parameter (QP) which is required to calculate the coding degradation is unavailable in this mode. To overcome the unavailability of QP, the value of QP is predicted using the available input parameters. The QP prediction is performed according to equation (16):

$$QP\_pred = a1 + b1 * log(mean\_nonIframeSizes) + c1 * log(resolution) + d1$$
$$* log(framerate) + e1 * log(iframe\_nonIframe\_ratio)$$

wherein *mean_nonIframeSizes* is the average over the sizes of all non-I frames,

$$iframe_{nonIframe_{ratio}} = \frac{mean_{IframeSizes}}{mean_{nonIframeSizes}}$$ and the coefficients $a1$, $b1$, $c1$, $d1$ and $e1$ are codec-dependent.

The maximum QP has 2 different values - 63 for H.264 and H.265; 255 for VP9. There is no case for 8 or 10-bit codec profiles in this mode as there is no access to the bit depth information.

Once the QP is predicted as described above, the coding degradation and other degradations are calculated as described in the core model to obtain the prediction for the parametric/deterministic part of the model.

The following coefficients refer to a preferred embodiment of the disclosure:

Table 5 - Mode 1 - PC/TV

| Codec | a | b | c | d |
|-------|-------|--------|--------|---------|
| H264 | 4.4498 | -0.5654 | 5.6638 | -2.5915 |
| H265 | 4.3375 | -0.5762 | 6.2471 | -3.003 |
| VP9 | 4.5301 | -0.9138 | 2.4256 | -1.5199 |

Table 6 - Mode 1 - PC/TV (QP prediction)

| Codec | a1 | b1 | c1 | d1 | e1 |
|-------|---------|----------|---------|----------|----------|
| H264 | 28.4333 | -7.3951 | 5.7821 | 0.2479 | -5.4537 |
| H265 | 22.3936 | -6.5297 | 5.1573 | -0.8999 | -2.2889 |
| VP9 | 92.1245 | -51.1209 | 40.6832 | -10.2195 | -18.7809 |

Table 7 - Mode 1 - Mobile/Tablet

| Codec | a | b | c | d |
|---|---|---|---|---|
| H264 | 4.6602 | -1.1312 | 4.2268 | -2.4471 |
| H265 | 4.5374 | -0.6829 | 3.5053 | -1.6074 |
| VP9 | 4.5253 | -1.2635 | 2.0733 | -1.8051 |

Table 8 - Mode 1 - Mobile/Tablet (QP prediction)

| Codec | a1 | b1 | c1 | d1 | e1 |
|---|---|---|---|---|---|
| H264 | 30.6150 | -7.4009 | 6.1174 | -0.8627 | -6.5126 |
| H265 | 29.6766 | -7.0577 | 5.7721 | -3.0477 | -3.8376 |
| VP9 | 145.1322 | -49.8642 | 34.3946 | 1.8316 | -24.9769 |

The resolution and temporal upscaling coefficients are the same as for the Level 3 case.

The features available to the Random Forest part for this mode are the ones that are described in the parametric part. Instead of just using the mean value of different features as in the parametric part, the Random Forest may use other statistical aggregations to take into account the variation of the features based on the content.

The features used may comprise at least one of

- Bit rate
- Resolution
- Frame rate
- Codec
- Codec Profile
- Frame sizes
- Ratio of I-Frame to non-I frame size
- Parametric/deterministic part prediction, $M_{parametric}$
- Predicted value of QP.

In addition to the above features, bits per pixel (

$$bitsperpixel = \frac{Bitrate}{Resolution * Framerate}$$

) and resolution scale factor $\frac{coding\_resolution}{display\_resolution}$ are used as inputs to the random forest.

Various statistical aggregation of the features may be computed, including, but not limited to the following:

- Mean value and logarithm of the bit rate
- Maximum, mean, standard deviation, IQR, kurtosis of non-I frame sizes and kurtosis of 1-frame sizes
- logarithm of resolution
- logarithm of frame rate
- Ratio of I-Frame to non-I frame sizes, including:

    -
    $$\frac{mean(iFrameSizes)}{mean(non-iFrameSizes)}$$

    -
    $$\frac{median(iFrameSizes)}{median(non-iFrameSizes)}$$

$$- \frac{standard\ deviation(iFrameSizes)}{standard\ deviation(non-iFrameSizes)}$$

- Logarithm of bits per pixel

The above features and the corresponding aggregations is a preferred embodiment of the disclosure.

The QP prediction is performed according to equation (17) as follows:

$$QP_{pred} = a1 + b1 * log(mean\_non - iframesize) + c1 * log(resolution) + d1 *$$

$$log(framerate) + e1 * log(iframe\_non - iframe\_ratio) \tag{17}$$

As in the Level 3 model, the final prediction is the weighted sum of the parametric part output and the Random Forest part output according to equation (1), for example:

$$Q = w_1 * M_{parametric} + w_2 * M_{randomForest}$$

Where $w_1$ = 0.5 and $w_2$ = 0.5.

In this disclosure, the Random Forest model uses 20 trees with a depth of 8. This hyper-parameter combination of the Random Forest is a preferred embodiment of the disclosure. The per-second quality score in this level is the same as the per-segment quality score as described above.

In case of a Level 1 model, the computation is performed as described below.

The deterministic model related to Level 1 preferably has access to at least one of bit rate, resolution, frame rate, codec and codec profile as input on a per-segment basis.

With respect to coding degradation, like the Level 2 model, the model corresponding to Level 1 has no access to the QP value. As in the case of Level 2, the value of QP is predicted using the available input parameters. The QP prediction for this mode is done as follows:

$$QP_{pred} = a1 + b1 * log(bitrate) + c1 * log(resolution) + d1 * log(framerate) \tag{18}$$

The coefficients *a1, b1, c*1 and *d*1 are codec dependent. The maximum QP has 2 different values - 63 for H.264 and H.265 and 255 for VP9. There is no case for 8 or 10-bit codec in this mode as there is no access to the bitdepth information.

Once the QP is predicted as described above, the coding degradation and other degradations are calculated as described in the core model to obtain the parametric part related prediction. The following coefficients refer to the preferred embodiment of the disclosure:

Table 9 - Mode 0 - PC/TV

| Codec | a | b | c | d |
|---|---|---|---|---|
| H264 | 4.3741 | -0.6126 | 6.1880 | -3.0061 |
| H265 | 4.2853 | -0.5342 | 6.9132 | -3.3489 |
| VP9 | 4.4382 | -0.7342 | 2.7162 | -1.5975 |

Table 10 - Mode 0 - PC/TV (QP prediction)

| Codec | a1 | b1 | c1 | d1 |
|---|---|---|---|---|
| H264 | -5.7284 | -5.3586 | 4.1965 | 5.6231 |
| H265 | -7.6867 | -6.0256 | 4.8298 | 4.0869 |

(continued)

| Codec | a1 | b1 | c1 | d1 |
|---|---|---|---|---|
| VP9 | -140.8384 | -46.5290 | 37.5395 | 27.5876 |

Table 11 - Mode 0 - Mobile/Tablet

| Codec | a | b | c | d |
|---|---|---|---|---|
| H264 | 4.7342 | -0.9469 | 4.0831 | -2.0624 |
| H265 | 4.5731 | -0.6835 | 3.3163 | -1.4604 |
| VP9 | 4.2624 | -0.6135 | 3.2368 | -2.2657 |

Table 12 - Mode 0 - Mobile/Tablet (QP prediction)

| Codec | a1 | b1 | c1 | d1 |
|---|---|---|---|---|
| H264 | -1.4644 | -4.9263 | 4.3784 | 3.0115 |
| H265 | -1.6535 | -5.8655 | 4.7672 | 2.3410 |
| VP9 | -65.7419 | -41.0775 | 28.7095 | 30.8075 |

The resolution and temporal upscaling coefficients are the same as for the Level 3 case.

For the Level 1 Random Forest model, in addition to the features used in the parametric part of the model, bits per pixel ( $bitsperpixel = \frac{Bitrate}{Resolution * Framerate}$ ), resolution scale factor ( $\frac{coding\_resolution}{display\_resolution}$ ) and the parametric part output are used as inputs, like in the Level 2 model.

In addition to the linear values, the logarithm of each of the features is used as input to the random forest model.

As in the Level 2 model, the final prediction is the weighted sum of the parametric part output and the Random Forest part output according to equation (1):

$$Q = w_1 * M_{parametric} + w_2 * M_{randomForest}$$

According to a preferred embodiment of the disclosure, $w_1$ = 0.75 and $w_2$ = 0.25 for Level 1 modeling.

In this disclosure, the Random Forest model uses 20 trees with a depth of 8. This hyper-parameter combination of the Random Forest is the preferred embodiment of the disclosure. The per-second quality score in this level is the same as the per-segment quality score as described above.

In addition to the model embodiments described above, a variant of the models consists in including the video codec profile as an additional input, if it is available, for all 3 Levels of the presented models. This feature can be used as either an additional input to the parametric /deterministic part of the model or as an additional feature in the random forest / machine-learning part of the model.

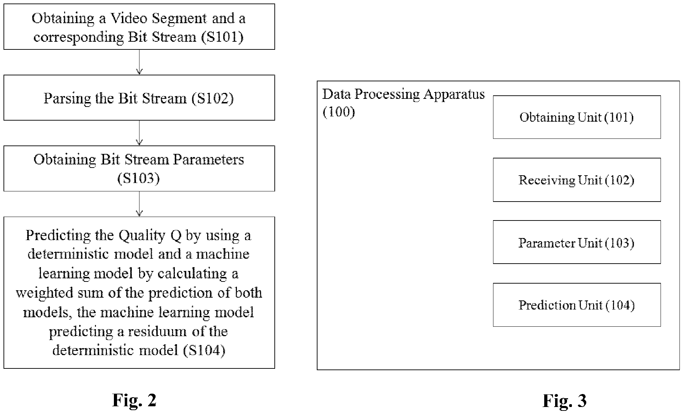

Figure 2 depicts a flowchart of a method of predicting the visually perceived video quality Q of a given video sequence based on the bit stream of said video sequence, and expressed on a video-quality rating scale, according to an embodiment of the disclosure. Therein, a video segment and a corresponding bit stream are obtained in step S101 and the bit stream is parsed in step S102 by a bit stream parser. Furthermore, in step S103 bit stream parameters are obtained. The quality *Q* is predicted in step S104 by using a deterministic model and a machine learning model with the obtained bit stream parameters, wherein the predicted video quality is a weighted sum of both models calculated in S105.

Figure 3 shows a data processing apparatus 100 according to an embodiment. The data processing apparatus 100 comprises an obtaining unit 101 for obtaining a video segment and a corresponding bit stream and a receiving unit 102 configured to parse the bit stream by a bit stream parser. A parameter unit 103 is configured to obtain bit stream parameters. A prediction unit 104 is configured to predict the video quality by using a deterministic model and a machine learning model with the obtained bit stream parameters, wherein the prediction unit 104 is configured to calculate the video quality as a weighted sum of both models.

According to the present disclosure, an information adaptive mixed deterministic/machine-learning-based bit stream video-quality model is proposed. By integration of the parametric part of the model with the machine learning part and its specific implementation by addressing the residuum error between deterministic prediction and the ground-truth used during model training and using the machine learning component for predicting that residuum, a greatly enhanced video quality prediction is achieved.

Therein, the same model structure is re-used. Where it is depending on the amount and type of available input information, the deterministic and machine-learning parts are adapted, as well as the weights of the two components.

In Level 1 and Level 2 models, the quantization parameter is predicted, while for Level 3 that feature is available and used directly.

Furthermore, a prediction method for per-second video quality score for the model is presented.

Other aspects, features, and advantages will be apparent from the summary above, as well as from the description that follows, including the figures and the claims.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

Appendix

MOSfromR can be expressed as follows:

```
def mos_from_r(Q):
    MOS_MAX = 4.5
    MOS_MIN = 1.0

    if Q >= 100:
        return MOS_MAX
    if Q <= 0:
        return MOS_MIN

    return MOS_MIN + (float(MOS_MAX - MOS_MIN) * float(Q) / 100.0) +
float(Q) * float(Q - 60.0) * float(100.0 - Q) * 0.000007
```

RfromMOS can be expressed as follows:

```
def r_from_mos(MOS):
    x = float(18566 - 6750 * MOS)
    if MOS > 4.5:
        MOS = 4.5

    if x < 0:
        num = 15 * np.sqrt(-903522 + 1113960 * MOS - 202500 * MOS * MOS)
        den = 6750 * MOS - 18566
        fra = float(num) / float(den)
        h = float(np.pi - np.arctan(fra)) / 3.0
    else:
        num = 15 * np.sqrt(-903522 + 1113960 * MOS - 202500 * MOS * MOS)
        den = 18566 - 6750 * MOS
        fra = float(num) / float(den)
        ar = np.arctan(fra)
        h = float(np.arctan(num / den)) / 3.0
    R = 20.0 * float(8 - np.sqrt(226) * np.cos(h + np.pi / 3)) / 3.0
    return R
```

scaleto5 can be expressed as follows:

```
def scaleto5(x):
    """

    (y-y1)/(x-x1) = (y2-y1)/(x2-x1) ---> x1 = 1, x2 = 4.5, y1 = 1, y2 = 5


    output = output_start + ((output_end - output_start) / (input_end -
input_start)) * (input - input_start)

    """


    input_start = 1
    input_end = 4.5
    output_start = 1
    output_end = 5


    if x >= 4.5:
        return 5


    return output_start + ((output_end - output_start) / (input_end -
input_start)) * (x - input_start)
```

References

A. Aaron, D. K. (2016). Patent No. US20160335754A1.

A. Raake, M. G. (2017). Scalable Video Quality Model for ITU-T P.1203 (aka P.NATS) for Bitstream-based Monitoring of HTTP Adaptive Streaming. QoMEX 2017. IEEE.

A. Rossholm, a. B. (2008). A new low complex referencefree video quality predictor. Multimedia Signal Processing, 2008 IEEE 10th Workshop, (pp. 765-768).

A. Takahashi, D. H. (2008). Standardization activities in the ITU for a QoE assessment of IPTV. pp. 78-84.

Cisco. (2017). Cisco Visual Networking Index: Forecast and Methodology, 2016-2021.

Decebal C. Mocanu, J. P. (2015). No-reference video quality measurement: added value of machine learning. Journal of Electronic Imaging.

E. Demirbilek, a. J. (2017). Machine Learning--Based Parametric Audiovisual Quality Prediction Models for Real-Time Communications. ACM Trans. Multimedia Comput. Commun. Appl.

ITU-T. (2014). Recommendation P.1201 - Parametric non-intrusive assessment of audiovisual media streaming quality. International Telecommunication Union.

ITU-T. (2016). Recommendation P.1203 - Parametric bitstream-based quality assessment of progressive download and adaptive audiovisual streaming services over reliable transport. International Telecommunication Union.

J. Søgaard, S. F. (2015). No-Reference Video Quality Assessment Using Codec Analysis. IEEE TRANSACTIONS ON CIRCUITS AND SYSTEMS FOR VIDEO TECHNOLOGY.

M. Shahid, A. R. (2011). A reduced complexity no-reference artificial neural networkbased video quality predictor. Image and Signal Process-ing (CISP), 2011 4th International Congress on, October 2011, (pp. 517-521).

M. Shahid, A. R. (2013). A no-reference machine learning based video quality predictor. QoMEX.

M. Shahid, A. R.-J. (2014). No-reference image and video quality assessment: a classification and review of recent approaches. EURASIP Journal on Image and Video.

MN. Garcia, W. R. (2016). Patent No. EP3291556A1.

N. Barman, E. J. (2019). No-Reference Video Quality Estimation Based on Machine Learning for Passive Gaming Video Streaming Applications. IEEE Access.

S. Göring, J. S. (2018). DeViQ -- A deep no reference video quality model. Electronic Imaging, Human Vision Electronic Imaging.

S. Göring, R. R. (2019). nofu - A Lightweight No-Reference Pixel Based Video Quality Model for Gaming Content. 2019 Eleventh International Conference on Quality of Multimedia Experience (QoMEX).

Z. Wang, A. B. (2004). Image quality assessment: from error visibility to structural similarity. IEEE transactions on image processing, 600-612.

Z. Wang, E. S. (2004). Multiscale structural similarity for image quality assessment. Conference Record of the Thirty-Seventh Asilomar Conference on Signals, Systems and Computers. IEEE.

**Claims**

1. Method for predicting the quality Q of a video bit stream, the method comprising:

   Obtaining (S101) a video segment and a corresponding bit stream,
   Parsing (S102) the bit stream by a bit stream parser,
   Obtaining (S103) bit stream parameters,
   Predicting (S104) the quality Q by using a parametric model and a machine learning model with the obtained bit stream parameters, wherein the predicted video quality is a weighted sum of the prediction of both models, wherein the machine learning model predicts a residuum of the parametric model, the machine learning model being trained on the difference between the prediction of the parametric model and ground truth data used for the training.

2. Method according to claim 1, wherein the prediction of the machine learning model comprises a sum of a prediction of the parametric model and the prediction of the residuum.

3. Method according to claim 1 or 2, wherein the predicted video quality Q, is computed as

$$Q = w_1 * M_{parametric} + w_2 * M_{machine\ learning},$$

   wherein $M_{parametric}$ and $M_{machine\ learning}$ are the results of the parametric model and the machine learning model, respectively, and
   $w_1$ and $w_2$ are weighting factors of the parametric model and the machine learning model, respectively with $w_1 + w_2 = 1$.

4. Method according to any one of the preceding claims, wherein the weighting factor values are dependent on the available bit stream parameters.

5. Method according to any one of the preceding claims, wherein the weighting factor of the machine learning model increases with the number of available bit stream parameters.

6. Method according to any one of the preceding claims, wherein the bit stream parameters comprise at least one of: bit rate or resolution or frame rate or codec information or video codec profile.

7. Method according to claim 6, wherein the bit stream parameters further comprise at least one of: frame sizes or ratio of 1-frame to non-I frame size or the prediction of the parametric model.

8. Method according to claim 6 or 7, wherein the bit stream parameters further comprise at least one of: average motion per frame or standard deviation of motion in the x-direction, horizontal motion, per frame or maximum quantization parameter of non-I frames or minimum quantization parameter or average quantization parameter of non-I frames or frame sizes and/or quantization degradation,

9. Method according to any one of claims 6 or 7, wherein a quantization parameter, QP, is predicted using said parameters.

10. Method according to claim 9, wherein a quantization degradation, *quant,* is computed as

$$quant = \frac{QP_{non-I\ frames}}{QP_{max}},$$

   wherein $QP_{non-I\ frames}$ is the quantization parameter of non-I frames in the bit stream and $QP_{max}$ is the maximum quantization parameter possible in the bit stream.

11. Method according to claim 10, wherein the QP is a parameter directly related to the level of compression applied during encoding of a video segment and indirectly related to the quality of a video segment.

**12.** Method according to claim 10 or 11, wherein *quant* is a normalized value of the QP.

**13.** Method according to any one of claims 10 to 12, wherein non-I frames are frames within the bit stream that are dependent on other frames in order to be decoded.

**14.** Method according to any one of the preceding claims, wherein the machine learning model is one of Random Forest, Support Vector Machine (SVM), and Support Vector Regression (SVR).

**15.** Method according to any one of the preceding claims, wherein the machine learning model comprises an initial data set which is trained by the machine learning model.

**16.** Data processing apparatus (100) comprising:

an obtaining unit (101) for obtaining a video segment and a corresponding bit stream,
a receiving unit (102) configured to parse the bit stream by a bit stream parser,
a parameter unit (103) for obtaining bit stream parameters, and
a prediction unit (104) configured to predict the video quality by using a parametric model and a machine learning model with the obtained bit stream parameters, wherein the prediction unit (104) is configured to calculate the video quality as a weighted sum of the prediction of both models, and
wherein the prediction unit (104) is configured to enable the machine learning model to predict a residuum of the parametric model, the machine learning model being trained on the difference between the prediction of the parametric model and ground truth data used for the training.

**17.** Data processing apparatus (100) according to claim 16, wherein the prediction of the machine learning model comprises a sum of a prediction of the parametric model and the prediction of the residuum.

**Patentansprüche**

**1.** Verfahren zur Vorhersage der Qualität *Q* eines Videobitstroms, wobei das Verfahren aufweist:

Erhalten (S101) eines Videosegments und eines entsprechenden Bitstroms,
Parsen (S102) des Bitstroms durch einen Bitstrom-Parser,
Erhalten (S103) von Bitstrom-Parametern,
Vorhersagen (S104) der Qualität *Q* durch Verwendung eines parametrischen Modells und eines maschinellen Lernmodells mit den erhaltenen Bitstrom-Parametern, wobei die vorhergesagte Videoqualität eine gewichtete Summe der Vorhersage beider Modelle ist, wobei das maschinelle Lernmodell ein Residuum des parametrischen Modells vorhersagt, wobei das maschinelle Lernmodell an der Differenz zwischen der Vorhersage des parametrischen Modells und den für das Training verwendeten Ground-Truth-Daten trainiert wird.

**2.** Verfahren nach Anspruch 1, wobei die Vorhersage des maschinellen Lernmodells eine Summe aus einer Vorhersage des parametrischen Modells und der Vorhersage des Residuums aufweist.

**3.** Verfahren nach Anspruch 1 oder 2, wobei die vorhergesagte Videoqualität Q berechnet wird als

$$Q = w_1 * M_{parametric} + w_2 * M_{machine\ learning}$$

wobei $M_{parametric}$ und $M_{machine\ learning}$ die Ergebnisse des parametrischen Modells bzw. des maschinellen Lernmodells sind, und
$w_1$ und $w_2$ Gewichtungsfaktoren des parametrischen Modells bzw. des maschinellen Lernmodells sind, wobei $w_1 + w_2 = 1$.

**4.** Verfahren nach einem der vorhergehenden Ansprüche, wobei die Werte der Gewichtsfaktoren von den verfügbaren Bitstrom-Parametern abhängig sind.

**5.** Verfahren nach einem der vorhergehenden Ansprüche, wobei der Gewichtungsfaktor des maschinellen Lernmodells mit der Anzahl der verfügbaren Bitstrom-Parameter zunimmt.

**6.** Verfahren nach einem der vorhergehenden Ansprüche, wobei die Bitstrom-Parameter mindestens eines aufweisen von:
Bitrate oder Auflösung oder Frame-Rate oder Codec-Informationen oder Video-Codec-Profil.

**7.** Verfahren nach Anspruch 6, wobei die Bitstrom-Parameter ferner mindestens eines aufweisen von:
Frame-Größen oder Verhältnis von I-Frame- zu Nicht-I-Frame-Größe oder die Vorhersage des parametrischen Modells.

**8.** Verfahren nach Anspruch 6 oder 7, wobei die Bitstrom-Parameter ferner mindestens eines aufweisen von: durchschnittliche Bewegung pro Frame oder Standardabweichung der Bewegung in x-Richtung, horizontale Bewegung, pro Frame oder maximaler Quantisierungsparameter von Nicht-I-Frames oder minimaler Quantisierungsparameter oder durchschnittlicher Quantisierungsparameter von Nicht-I-Frames oder Frame-Größen und/oder Quantisierungsverschlechterung.

**9.** Verfahren nach einem der Ansprüche 6 oder 7, wobei ein Quantisierungsparameter, QP, unter Verwendung der genannten Parameter vorhergesagt wird.

**10.** Verfahren nach Anspruch 9, wobei eine Quantisierungsverschlechterung, *quant,* berechnet wird als

$$quant = \frac{QP_{non-I\,frames}}{QP_{max}}$$

wobei $QP_{non-I\,frames}$ der Quantisierungsparameter von Nicht-I-Frames im Bitstrom ist und $QP_{max}$ der maximal mögliche Quantisierungsparameter im Bitstrom ist.

**11.** Verfahren nach Anspruch 10, wobei der QP ein Parameter ist, der direkt mit dem während der Codierung eines Videosegments angewandten Komprimierungsgrad und indirekt mit der Qualität eines Videosegments zusammenhängt.

**12.** Verfahren nach Anspruch 10 oder 11, wobei *quant* ein normalisierter Wert des QP ist.

**13.** Verfahren nach einem der Ansprüche 10 bis 12, wobei Nicht-I-Frames Frames innerhalb des Bitstroms sind, die von anderen Frames abhängig sind, um decodiert zu werden.

**14.** Verfahren nach einem der vorhergehenden Ansprüche, wobei das maschinelle Lernmodell eines der Modelle Random Forest, Support Vector Machine (SVM) und Support Vector Regression (SVR) ist.

**15.** Verfahren nach einem der vorhergehenden Ansprüche, wobei das maschinelle Lernmodell einen Anfangsdatensatz aufweist, der durch das maschinelle Lernmodell trainiert wird.

**16.** Datenverarbeitungsvorrichtung (100), die aufweist:

eine Erhaltungseinheit (101) zum Erhalten eines Videosegments und eines entsprechenden Bitstroms,
eine Empfangseinheit (102), die konfiguriert ist, den Bitstrom durch einen Bitstrom-Parser zu parsen,
eine Parametereinheit (103) zum Erhalten von Bitstrom-Parametern, und
eine Vorhersageeinheit (104), die konfiguriert ist, die Videoqualität unter Verwendung eines parametrischen Modells und eines maschinellen Lernmodells mit den erhaltenen Bitstrom-Parametern vorherzusagen, wobei die Vorhersageeinheit (104) konfiguriert ist, die Videoqualität als eine gewichtete Summe der Vorhersage beider Modelle zu berechnen, und
wobei die Vorhersageeinheit (104) konfiguriert ist, es dem maschinellen Lernmodell zu ermöglichen, ein Residuum des parametrischen Modells vorherzusagen, wobei das maschinelle Lernmodell an der Differenz zwischen der Vorhersage des parametrischen Modells und den für das Training verwendeten Ground-Truth-Daten trainiert wird.

**17.** Datenverarbeitungsvorrichtung (100) nach Anspruch 16, wobei die Vorhersage des maschinellen Lernmodells eine Summe aus einer Vorhersage des parametrischen Modells und der Vorhersage des Residuums aufweist.

**Revendications**

1. Procédé de prévision de la qualité $Q$ d'un train binaire vidéo, ledit procédé comprenant :

   l'obtention (S101) d'un segment vidéo et d'un train binaire correspondant,
   l'analyse (S102) du train binaire par un analyseur de train binaire,
   l'obtention (S103) de paramètres de train binaire,
   la prévision (S104) de la qualité $Q$ au moyen d'un modèle paramétrique et d'un modèle d'apprentissage automatique avec les paramètres de train binaire obtenus, la qualité vidéo prévue étant une somme pondérée de la prévision des deux modèles,
   où le modèle d'apprentissage automatique prévoit un résidu du modèle paramétrique, ledit modèle d'apprentissage automatique étant entraîné sur la différence entre la prévision du modèle paramétrique et les données de réalité de terrain utilisées pour l'entraînement.

2. Procédé selon la revendication 1, où la prévision du modèle d'apprentissage automatique comprend une somme d'une prévision du modèle paramétrique et de la prévision du résidu.

3. Procédé selon la revendication 1 ou 2, où la qualité vidéo prévue Q est calculée comme suit

$$Q = w_1 * M_{parametric} + w_2 * M_{machine\ learning}$$

   où $M_{parametric}$ et $M_{machine\ learning}$ sont les résultats du modèle paramétrique et du modèle d'apprentissage automatique, respectivement, et
   $w_1$ et $w_2$ sont des facteurs de pondération du modèle paramétrique et du modèle d'apprentissage automatique, respectivement, avec $w_1 + w_2 = 1$.

4. Procédé selon l'une des revendications précédentes, où les valeurs des facteurs de pondération dépendent des paramètres de train binaire disponibles.

5. Procédé selon l'une des revendications précédentes, où le facteur de pondération du modèle d'apprentissage automatique croît avec le nombre de paramètres de train binaire disponibles.

6. Procédé selon l'une des revendications précédentes, où les paramètres de train binaire comprennent au moins l'un des éléments suivants :
   le débit binaire, la résolution, la fréquence d'images, les informations de codec, le profil de codec vidéo.

7. Procédé selon la revendication 6, où les paramètres de train binaire comprennent en outre au moins l'un des éléments suivants :
   la taille d'images, le rapport entre la taille d'image I et la taille d'image non I, la prévision du modèle paramétrique.

8. Procédé selon la revendication 6 ou la revendication 7, où les paramètres de train binaire comprennent en outre au moins l'un des éléments suivants :
   le déplacement moyen par image, l'écart type de déplacement dans la direction x, le déplacement horizontal par image, le paramètre de quantification maximal des images non I, le paramètre de quantification minimal, le paramètre de quantification moyen des images non I, les tailles d'image et/ou la dégradation de la quantification.

9. Procédé selon la revendication 6 ou la revendication 7, où un paramètre de quantification, QP, est prévu au moyen desdits paramètres.

10. Procédé selon la revendication 9, où une dégradation de quantification, *quant,* est calculée conformément à :

$$quant = \frac{QP_{non-I frames}}{QP_{max}}$$

   où $QP_{non-I\ frames}$ est le paramètre de quantification des images non I dans le train binaire et $QP_{max}$ est le paramètre de quantification maximal possible dans le train binaire.

**11.** Procédé selon la revendication 10, où QP est un paramètre directement lié au niveau de compression appliqué lors du codage d'un segment vidéo, et indirectement lié à la qualité d'un segment vidéo.

**12.** Procédé selon la revendication 10 ou la revendication 11, où *quant* est une valeur normalisée de QP.

**13.** Procédé selon l'une des revendications 10 à 12, où les images non I sont des images du train binaire qui dépendent d'autres images pour être décodées.

**14.** Procédé selon l'une des revendications précédentes, où le modèle d'apprentissage automatique est l'un des modèles suivants : forêt aléatoire, machine à vecteurs de support (SVM) et régression par vecteurs de support (SVR).

**15.** Procédé selon l'une des revendications précédentes, où le modèle d'apprentissage automatique comprend un ensemble de données initial entraîné par le modèle d'apprentissage automatique.

**16.** Appareil de traitement de données (100), comprenant :

une unité d'obtention (101) pour obtenir un segment vidéo et un train binaire correspondant,
une unité de réception (102) configurée pour analyser le train binaire au moyen d'un analyseur de train binaire,
une unité de paramètres (103) pour obtenir des paramètres de train binaire, et
une unité de prévision (104) configurée pour prévoir la qualité vidéo au moyen d'un modèle paramétrique et d'un modèle d'apprentissage automatique avec les paramètres de train binaire obtenus, ladite unité de prévision (104) étant configurée pour calculer la qualité vidéo en tant que somme pondérée de la prévision des deux modèles, et
où l'unité de prévision (104) est configurée pour permettre au modèle d'apprentissage automatique de prévoir un résidu du modèle paramétrique, le modèle d'apprentissage automatique étant entraîné sur la différence entre la prévision du modèle paramétrique et les données de réalité de terrain utilisées pour l'entraînement.

**17.** Appareil de traitement de données (100) selon la revendication 16, où la prévision du modèle d'apprentissage automatique comprend une somme d'une prévision du modèle paramétrique et de la prévision du résidu.

EP 3 800 882 B1

**Fig. 1**

Obtaining a Video Segment and a corresponding Bit Stream (S101)

↓

Parsing the Bit Stream (S102)

↓

Obtaining Bit Stream Parameters (S103)

↓

Predicting the Quality Q by using a deterministic model and a machine learning model by calculating a weighted sum of the prediction of both models, the machine learning model predicting a residuum of the deterministic model (S104)

**Fig. 2**

Data Processing Apparatus (100)

Obtaining Unit (101)

Receiving Unit (102)

Parameter Unit (103)

Prediction Unit (104)

**Fig. 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3291556 A1

- US 20160335754 A1

### Non-patent literature cited in the description

- *ITU-T, Recommendation P.1203,* 2016
- *ITU-T, Recommendation P. 1203,* 2016
- Scalable Video Quality Model for ITU-T P.1203 (aka P.NATS) for Bitstream-based Monitoring of HTTP Adaptive Streaming. **A. RAAKE, M. G.** QoMEX 2017. IEEE, 2017
- **A. ROSSHOLM, A. B.** A new low complex referencefree video quality predictor. Multimedia Signal Processing. *2008 IEEE 10th Workshop,* 2008, 765-768
- **A. TAKAHASHI, D. H.** Standardization activities in the ITU for a QoE assessment of IPTV. 2008, 78-84
- **CISCO.** *Cisco Visual Networking Index: Forecast and Methodology,* 2017, 2016-2021
- **DECEBAL C. MOCANU, J. P.** No-reference video quality measurement: added value of machine learning. *Journal of Electronic Imaging,* 2015
- **E. DEMIRBILEK, A. J.** Machine Learning--Based Parametric Audiovisual Quality Prediction Models for Real-Time Communications. *ACM Trans. Multimedia Comput. Commun. Appl.,* 2017
- **ITU-T.** Recommendation P.1201 - Parametric non-intrusive assessment of audiovisual media streaming quality. *International Telecommunication Union,* 2014
- **ITU-T.** Recommendation P.1203 - Parametric bitstream-based quality assessment of progressive download and adaptive audiovisual streaming services over reliable transport. *International Telecommunication Union,* 2016

- **J. SØGAARD, S. F.** No-Reference Video Quality Assessment Using Codec Analysis. *IEEE TRANSACTIONS ON CIRCUITS AND SYSTEMS FOR VIDEO TECHNOLOGY,* 2015
- **M. SHAHID, A. R.** A reduced complexity no-reference artificial neural networkbased video quality predictor. Image and Signal Process-ing (CISP). *2011 4th International Congress on,* October 2011, 517-521
- **M. SHAHID, A. R.** A no-reference machine learning based video quality predictor. *QoMEX,* 2013
- **M. SHAHID, A. R.-J.** No-reference image and video quality assessment: a classification and review of recent approaches. *EURASIP Journal on Image and Video,* 2014
- **N. BARMAN, E. J.** No-Reference Video Quality Estimation Based on Machine Learning for Passive Gaming Video Streaming Applications. *IEEE Access,* 2019
- **S. GÖRING, J. S.** DeViQ -- A deep no reference video quality model. *Electronic Imaging, Human Vision Electronic Imaging,* 2018
- **S. GÖRING, R. R.** nofu - A Lightweight No-Reference Pixel Based Video Quality Model for Gaming Content. *Eleventh International Conference on Quality of Multimedia Experience (QoMEX),* 2019
- **Z. WANG, A. B.** Image quality assessment: from error visibility to structural similarity. *IEEE transactions on image processing,* 2004, 600-612
- Multiscale structural similarity for image quality assessment. **Z. WANG, E. S.** Conference Record of the Thirty-Seventh Asilomar Conference on Signals, Systems and Computers. IEEE, 2004